Europäisches Patentamt

European Patent Office

Office européen des brevets

(19)

(11) Publication number:

0 395 033
A2

# (12) EUROPEAN PATENT APPLICATION

(21) Application number: 90107890.7

(22) Date of filing: 25.04.90

(51) Int. Cl.⁵: G06F 1/16

(30) Priority: 28.04.89 JP 51217/89 U

(43) Date of publication of application:
31.10.90 Bulletin 90/44

(84) Designated Contracting States:
DE FR GB

(71) Applicant: Kabushiki Kaisha Toshiba
72, Horikawa-cho Saiwai-ku
Kawasaki-shi(JP)

(72) Inventor: Furuya, Seiichi, c/o Intellectual
Property Div.
Kabushiki Kaisha Toshiba, 1-1, Shibaura
1-chome
Minato-ku, Tokyo 105(JP)

(74) Representative: Henkel, Feiler, Hänzel &
Partner
Möhlstrasse 37
D-8000 München 80(DE)

(54) Portable computer to which different types of flat display panels can be attached.

(57) In a system of this invention, either a first type flat panel display unit (5, 7, 9) or a second type flat panel display unit (5, 7, 9) which is different in type from the first type flat panel display unit can be selectively, mechanically, and electrically connected and disconnected to and from a base unit (3). The base unit (3) includes a power supply (319) for applying a reference voltage, and applies the reference voltage to a display unit which is mechanically and electrically connected thereto. The first type flat panel display unit (5, 7, 9) is driven by the reference voltage. The second type flat panel display unit (5, 7, 9) includes a voltage converter (503, 903) and is driven by a voltage converted from the reference voltage. With the above arrangement, the system can use a plurality of flat panel display units with one base unit (3).

FIG. 2

EP 0 395 033 A2

# Portable computer to which different types of flat display panels can be attached

The present invention relates to a system, such as a laptop type portable computer or a laptop type wordprocessor, wherein a flat panel display unit is connected to a main body and, more particularly, to a system wherein a flat panel display unit can be detached from a main body.

In recent years, laptop type portable computers having main bodies to which large-size flat panel display units are rotatably connected have been widely used. These laptop type portable computers are disclosed in, e.g., USP 4,497,036, USP 4,571,456, USP 4,667,299, USP 4,730,364, USP 4,739,316, USP 4,742,478, USP 4,749,364, USP 4,781,422, USP 4,839,837, USP 4,846,536, USP 4,852,033, USP 4,684,523, USP 4,894,792, USP 4,901,261, and USP 4,903,221.

Of these laptop type portable computers, display detachable type portable computers disclosed in, e.g., USP 4,749,364, USP Application No. 07/428,772, and USP Application No. 07/406,614 have flat panel display units detachable from computer main bodies. A display detachable type portable computer of this type is used in the following two types of operation modes. In the first operation mode, a flat panel display unit is electrically and mechanically connected to a computer main body. In the second operation mode, the flat panel display unit is detached from the computer main body, and the computer main body is electrically connected to a CRT display unit. An operator normally operates the display detachable type portable computer in the first operation mode. Since currently available flat panel displays have low resolutions, when an operator want to see high-resolution images, he/she electrically connects a computer body to a CRT display unit. When the operator uses the computer main body by connecting it to the CRT display unit, he/she detaches the flat panel display unit from the computer main body because it interferes with an operation. In this case, therefore, the operator operates the computer main body without the flat panel display unit.

Although the flat panel display unit can be detached from the main body of the above-described display detachable type portable computer, a flat panel display unit to be mounted on one type of portable computer is limited to only one type. Various types of flat panel displays are currently available, e.g., a reflection type liquid crystal display for reflecting external light, a transmission type liquid crystal display for receiving light from the rear surface, a color liquid crystal display, and a plasma display. In spite of these various types of displays, a user can use only one type of flat panel display for one type of display detachable type portable computer because the physical and electrical specifications of a computer body are matched with only one type of display.

It is an object of the present invention to provide a system wherein a plurality of types of flat panel displays can be selectively, mechanically, and electrically connected to one type of main body.

It is another object of the present invention to provide a system wherein a plurality of types of display units having different driving voltages can be selectively, mechanically, and electrically connected to one type of main body.

It is still another object of the present invention to provide a system wherein a transmission type liquid crystal display and a reflection type liquid crystal display can be selectively, electrically, and mechanically connected to one type of main body.

It is still another object of the present invention to provide a system wherein a monochromatic liquid crystal display and a color liquid crystal display can be selectively, electrically, and mechanically connected to one type of main body.

A system of the present invention comprises a main body, a first flat panel display unit detachably mounted on the main body, and a second flat panel display unit which is different in type from the first flat panel display unit and is detachably mounted on the main body. The main body includes a first mechanical connecting portion, a first connector, a display controller electrically connected to the first connector, and a power supply, electrically connected to the first connector, for applying a reference voltage thereto. The first flat panel display unit includes a first flat panel display, a second mechanical connecting portion detachably and mechanically connected to the first mechanical connecting portion, a second connector detachably and electrically connected to the first connector, and a first display circuit for displaying data from the display controller through the first and second connectors and displaying data on the first flat panel display in a first display method upon reception of the reference voltage from the power supply. The second flat panel display unit includes a second flat panel display, a third mechanical connecting portion detachably and mechanically connected to the first mechanical connecting portion, a third connector detachably and electrically connected to the first connector, and a second display circuit for displaying data from the display controller through the first and third connectors and displaying data on the second flat panel display by a second display method upon reception of the reference voltage from the power supply.

In the system of the present invention, the second mechanical connecting portion of the first flat panel display unit or the third mechanical connecting portion of the second flat panel display unit can be mechanically connected to the first mechanical connecting portion of the main body, and at the same time, the second connector of the first flat panel display unit or the third connector of the second flat panel display unit can be electrically connected to the first connector of the main body. With this arrangement, a user can use a plurality of types of flat panel display units for one main body. That is, the user can enjoy a wide range of choice with regard to flat panel display units. In addition, a currently used old type flat panel display unit can be easily replaced with a newly developed high-performance flat panel display unit.

This invention can be more fully understood from the following detailed description when taken in conjunction with the accompanying drawings, in which:

Fig. 1 is a perspective view, showing an outer appearance of a system of the present invention, for explaining its arrangement;

Fig. 2 is a block diagram for explaining an arrangement of the system of the present invention;

Fig. 3 is a perspective view, showing an outer appearance of the system, for explaining an arrangement in a case wherein one of a plurality of types of flat panel display units is connected to a main body; and

Fig. 4 is a perspective view, showing an outer appearance of the system, for explaining a state in which the flat panel display unit in Fig. 3 is closed.

A system according to an embodiment of the present invention will be described below with reference to the accompanying drawings.

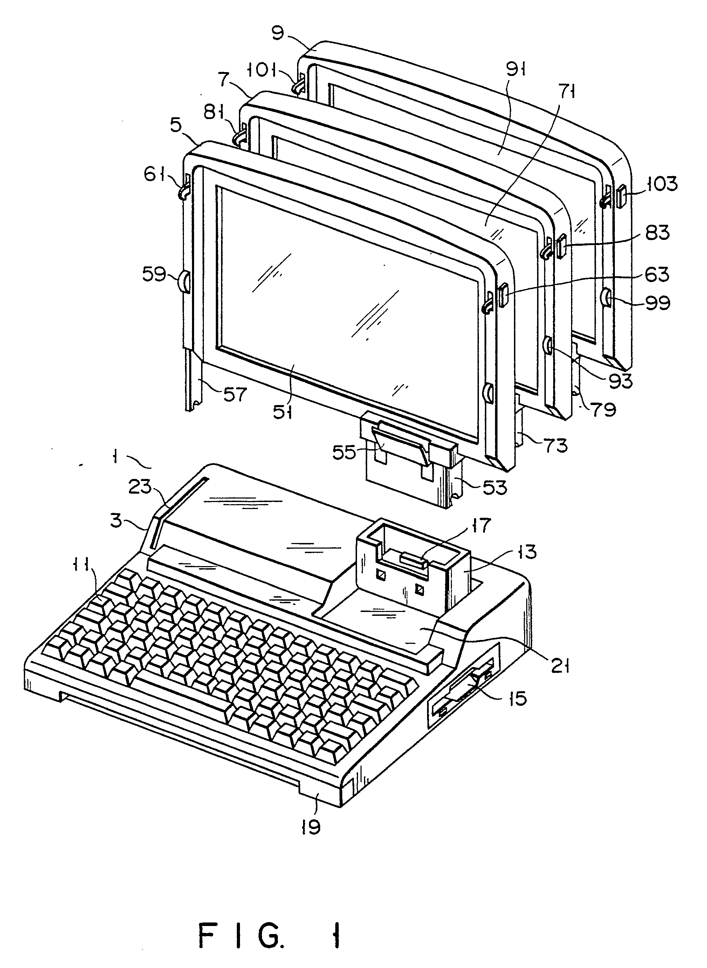

Fig. 1 is a perspective view for explaining an arrangement of the system according to the present invention. A system 1 of the present invention includes a base unit 3, a back-light type liquid crystal display unit 5, a reflection type liquid crystal display unit 7, and a color type liquid crystal display unit 9. The base unit 3 has a front portion and a rear portion. The front portion has a keyboard unit 11 and a slidable handle 19 respectively arranged on its upper surface and front end surface. The rear portion has a socket mounted hollow 21 and a leg mounted groove 23. A socket 13 is rotatably connected to the socket mounted hollow 21. A first connector 17 is fixed in the socket 13. In addition, the base unit 3 has a floppy disk drive 15.

The back-light type liquid crystal display unit 5 includes a display unit case, a back-light type liquid crystal display 51 housed in the display unit case, a first leg 53 which is fixed to the display unit case and is detachably and mechanically connected to the socket 13, a second leg 57 which is fixed to the display unit case and is detachably and rotatably connected to the base unit 3 in the leg mounted groove 23, a pair of first latches 61 respectively engaged with a pair of holes in both ends of the keyboard 11, a pair of first springs 59 for causing the display unit 4 to hop up, and a pair of first slide buttons 63 for respectively actuating the pair of first latches 61. A second connector is fixed in the first leg 53. When the first leg 53 is mechanically connected to the socket 13, the second connector is electrically connected to the first connector 17. A first rotatable lever 55 is rotatably fixed to the first leg 53. The first rotatable lever 55 has a pair of second latches which are respectively engaged with a pair of holes in the front surface of the socket 13.

Similar to the back-light type liquid crystal display unit 5, the reflection type liquid crystal display unit 7 includes a display unit case, a reflection type liquid crystal display 71 housed in the display unit case, a third leg 73 which is fixed to the display unit case and is detachably and mechanically connected to the socket 13, a fourth leg which is fixed in the display unit case and is detachably and rotatably connected to the base unit 3 in the leg mounted groove 23, a pair of third latches 81 respectively engaged with the pair of holes in both ends of the keyboard unit 11, a pair of second springs 79 for causing the display unit 7 to hop up, and a pair of second slide buttons 83 for respectively actuating the pair of third latches 81. A third connector is fixed in the third leg 73. When the third leg 73 is mechanically connected to the socket 13, the third connector electrically connected to the first connector 17 is fixed in the first leg 53. A second rotatable lever is rotatably fixed to the third leg 73. The second rotatable lever has a pair of fourth latches which are respectively engaged with the pair of holes in the front surface of the socket 13.

Similar to the back-light type liquid crystal display unit 5 and the reflection type liquid crystal display unit 7, the color type liquid crystal display unit 9 includes a display unit case, a color type liquid crystal display 91 housed in the display unit case, a fifth leg 93 which is fixed to the display unit case and is detachably and mechanically connected to the socket 13, a sixth leg which is fixed to the display unit case and is detachably and rotatably connected to the base unit 3 in the leg mounted groove 23, a pair of fifth latches 101 respectively engaged with the pair of holes in both ends of the keyboard unit 11, a pair of third springs 99 for causing the display unit 7 to hop up, and a pair of third slide buttons 103 for respectively actuating the pair of fifth latches 101. A fourth connector is fixed in the fifth leg 93. When the fifth leg 93 is mechanically connected to the socket 13, the fourth connector electrically connected to the first connector 17 is fixed in the fifth leg 93. A third rotatable lever is rotatably fixed to the fifth leg 93. The third rotatable lever has a pair of sixth latches which are respectively engaged with the pair of holes in the front surface of the socket 13.

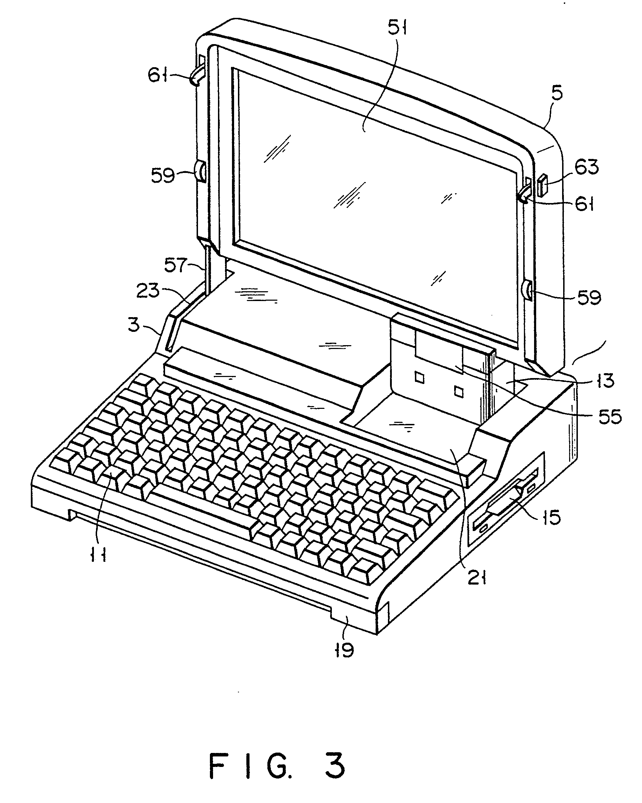

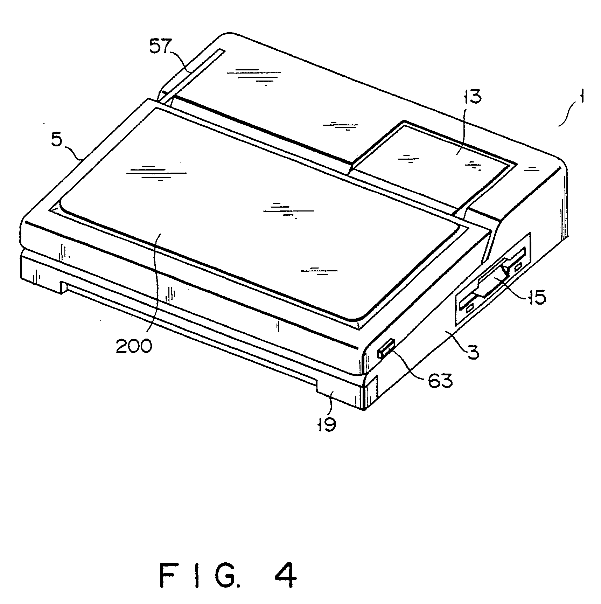

When one of the display units 5, 7, and 9 is selected to be mechanically and electrically connected to the base unit 3, the base unit 3 can be used as a laptop PC. Figs. 3 and 4 are perspective views respectively showing outer appearances of the system when the back-light type liquid crystal display unit 5 is electrically and mechanically connected to the base unit 3. When the display unit 5 is mechanically and electrically connected to the base unit 3, the display unit 5 can be pivoted between an open position to allow an operator to see the display screen and a closed position where the display unit 5 covers the keyboard unit 11. Similarly, when the reflection type liquid crystal display unit 7 or the color type liquid crystal display unit 9 is electrically and mechanically connected to the base unit 3, the display unit 7 or 9 can be pivoted between the open position to allow an operator to see the display screen and the closed position where the display unit 7 or 9 covers the keyboard unit 11.

In this embodiment, each display unit has two legs. In the system of the present invention, however, each display unit and the base unit are not limited to specific structures as long as each display unit can be rotatably, electrically, and mechanically connected to the base unit.

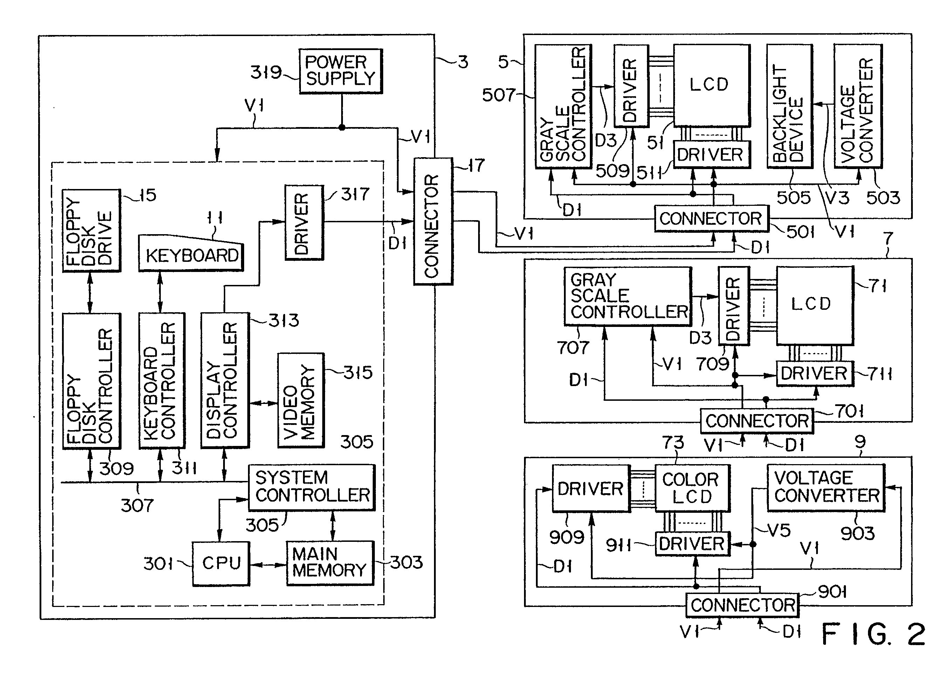

Fig. 2 is a block diagram for explaining a circuit arrangement of the system of the embodiment. The base unit 3 includes a circuit module enclosed with a dotted line in Fig. 2, a power supply 319 for applying a reference voltage V1 through the circuit module and the connector 17 to a display unit connected to the base unit 3, a keyboard 11, and a floppy disk drive 15. A CPU 301 performs data processing. A main memory 303 stores data to be processed by the CPU 303. A display controller 313 controls an operation of a display unit connected to the base unit 3. A video memory 315 stores data to be displayed on the display screen of a display unit connected to the base unit 3. A keyboard controller 311 controls an operation of the keyboard 11. A floppy disk controller 309 controls an operation of the floppy disk drive 15. A system controller 315 controls operations of the keyboard controller 311, the floppy disk controller 309, the display controller 313, the CPU 301, and the main memory 303 which are connected to the system controller 315 through an internal bus 307.

A driver 317 sends display data D1 output from the display controller 313 through the connector 17 to a display unit connected to the base unit 3.

The back-light type liquid crystal display unit 5 includes a second connector 501. The second connector is electrically connected to the first connector 17 when the first leg 53 is mechanically connected to the socket 13. The display unit 5 includes a voltage converter 503. The voltage converter 503 is electrically connected to the second connector 501, and receives the reference voltage V1 from the power supply 319 through the first and second connectors 17 and 501. The voltage converter 503 converts the reference voltage V1 into a back-light driving voltage V3. The display unit 5 includes a back-light device 505 having a fluorescence-luminescence panel or an electroluminescence panel. The back-light device 505 is electrically connected to the voltage converter 503, and receives the back-light driving voltage V3 from the voltage converter 503. Upon reception of the back-light driving voltage V3, the back-light device 505 radiates light on the back-light type liquid crystal display 51 from its rear surface. The display unit 5 includes a gray scale controller 507. The gray scale controller 507 is electrically connected to the second connector 507, and receives the display data D1 and the reference voltage V1 from the driver 317 and the power supply 319, respectively, through the first and second connectors 17 and 501. The gray scale controller 507 is driven by the reference voltage V1, and converts the display data D1 into display data D3 having gray scale data. The display unit 5 includes drivers 509 and 511. The driver 509 is electrically connected to the gray scale controller 507 and the second connector 501, and receives the reference voltage V1 from the power supply 319 through the first and second connectors 17 and 501 and the display data D3 supplied from the gray scale controller 507. The driver 509 is driven by the reference voltage V1, and controls rows of the liquid crystal display 51 in accordance with the display data D3. The driver 511 is electrically connected to the second connector 501, and receives the reference voltage V1 and the display data D1 from the power supply 319 and the driver 317, respectively, through the first and second connectors 17 and 501. The driver 511 is driven by the reference voltage V1, and controls columns of the liquid crystal display 51 in accordance with the display data D1. With the above-described arrangement, the back-light type liquid crystal display unit 5 can display monochrome data having gray scale data on the back-light type liquid crystal display 51.

The reflection type liquid crystal display unit 7 includes a third connector 701. The third connector 701 is electrically connected to the first connector 17 when the third leg 73 is mechanically connected to the socket 13. The display unit 7 includes a gray scale controller 707. The gray scale controller 707 is electrically connected to the third connector 701, and receives display data D1 and the reference voltage V1 from the driver 317 and the power supply 319, respectively, through the first and second connectors 17 and 701. The gray scale controller 707 is driven by the reference voltage V1, and converts the display data D1 into display data D3 having gray scale data. The display unit 7 includes drivers 709 and 711. The driver 709 is electrically connected to the gray scale controller 707 and the third connector 701, and receives the reference voltage V1 from the power supply 319 through the first and third connectors 17 and 701, and the display data D3 from the gray scale controller 707. The driver 709 is driven by the reference voltage V1, controls rows of the liquid crystal display 71 in accordance with the display data D3. The driver 711 is electrically connected to the third connector 701, and receives the reference voltage V1 and the display data D1 from the power supply 319 and the driver 317, respectively, through the first and third connector 17 and 701. The driver 711 is driven by the reference voltage V1, and controls columns of the liquid crystal display 71 in accordance with the display data D1. With the above-described arrangement, the reflection type liquid crystal display unit 7 can display monochromatic data having gray scale data on the reflection type liquid crystal display 71.

The color type liquid crystal display unit 9 includes a fourth connector 901. The fourth connector 901 is electrically connected to the first connector 17 when the fifth leg 93 is mechanically connected to the socket 13. The display unit 9 includes a voltage converter 903. The voltage converter 903 is electrically connected to the fourth connector 901, and receives the reference voltage V1 from the power supply 319 through the first and fourth connectors 17 and 901. The voltage converter 903 converts the reference voltage V1 into a voltage V5 for driving the color liquid crystal display 73. The display unit 9 includes drivers 909 and 911. The driver 909 is electrically connected to the fourth connector 901 and the voltage converter 903, and receives display data D1 from the driver 317 through the first and fourth connectors 17 and 901, and the voltage V5 from the voltage converter 903. The drivers 909 and 911 are driven by the reference voltage V5, and control rows and columns of the liquid crystal display 91 in accordance with the display data D1. With the above-described arrangement, the color type liquid crystal display unit 9 can display color data on the color type liquid crystal display 91.

In the system of the present invention, the base unit 3 includes the power supply 319 for applying the reference voltage V1, and each display unit which requires a voltage other than the reference voltage V1 incorporates the converter for generating a required voltage from the reference voltage V1. Therefore, the back-light type flat panel display unit 5 and the reflection type flat panel display unit 7 can be used with one type of base unit. In addition, since the base unit 3 includes the circuit for generating display data, and each display unit which requires monochromatic display data incorporates the circuit for generating monochromatic display data from color display data, the monochromatic type flat panel display unit 5 or 7 and the color type flat panel display unit 9 can be used with one type of base unit. Moreover, in the system of the present invention, if a low voltage is used as the reference voltage V1 and is increased by the voltage converter 503 or 903 of the flat panel display unit 5 or 9, since the low voltage is to be applied to the first and fourth connectors 17 and 901, even if an operator accidentally touches the connectors when the flat panel display 5 or 9 is detached, he/she does not receives an electric shock of a high voltage.

In the embodiment, the back-light flat panel display unit 5, the reflection type flat panel display unit 7, and the color type flat panel display unit 9 are used with the single base unit 3 of the system. As another embodiment, however, only the back-light type flat panel display unit 5 and the reflection type flat panel display unit 7 can be interchangeably used in the system. In this system, the display units 5 and 7 may respectively include the gray scale controllers 507 and 707, or the base unit 3 may includes one gray scale controller so as to directly supply monochromatic data to the respective display units. As still another embodiment, a plasma type flat panel display unit can be used in a system in addition to the back-light type flat panel display unit 5, the reflection type flat panel display unit 7, and the color type flat panel display unit 9.

**Claims**

1. A data processing apparatus with a flat panel display unit comprising:
input means (11, 311) for inputting data and commands;
data processing means (301) for executing data processing on the basis of the data and commands input by said input means (11, 311);
display driving means (313, 317), controlled by said data processing means (301), for outputting a drive signal to drive said flat panel display unit;
main power supply means (319) for generating a power supply voltage to drive said data processing means (301), said display driving means (313, 317), and said flat panel display unit;

a case unit (3) in which said data processing means (301), said display driving means (313, 317), said input means (11, 311), and said main power supply means (319) are arranged; and

first connector means (17), arranged on said case unit (3), for outputting the drive signal from said display driving means (313, 317) and the power supply voltage from said main power supply means (319) to the outside of said case unit (3);

characterized by further comprising:

a first flat panel display unit (5, 7, 9) which is prepared as a unit which constitutes said flat panel display unit, has second connector means (501) detachable from said first connector means (17), and a detachable mechanism (13, 53) detachable from said case unit (3), and displays data output from said data processing means (301) in accordance with the drive signal and the power supply voltage supplied through the set first and second connector means (17, 501); and

a second flat panel display unit (7, 9) which is prepared as a unit which constitutes said flat panel display unit has said second connector means (701, 901), (8, 8a), said detachable mechanism (13, 53), and converting means (503, 903) for converting the power supply voltage into a power supply voltage required to perform a display operation for displaying the data output from said data processing means (301), and executes the display operation in accordance with the drive signal and the power supply voltage from said converting means (503, 903) to serve as a replacement unit with respect to said first flat panel display unit (5, 7, 9).

2. An apparatus according to claim 1, characterized in that said second flat panel display unit has a transmission type liquid crystal display unit (51), and back-light means (505) required for a display operation of said transmission type liquid crystal display unit (51), and drives said back-light means (505) by a power supply voltage generated from said converting means (503), and drives said transmission type liquid crystal display unit (51) in accordance with the drive signal and the power supply voltage supplied through said first and second connector means (17, 501).

3. An apparatus according to claim 1, characterized in that said first flat panel display unit has a reflection type liquid crystal display unit (71).

4. An apparatus according to claim 1, characterized in that said converting means (503, 903) has a DC - DC converter for converting the power supply voltage generated from said main power supply means (319), into a power supply voltage having a predetermined level.

5. An apparatus according to claim 2, characterized in that said back-light means (505) comprises a fluorescent lamp.

6. An apparatus according to claim 2, characterized in that said converting means (503, 903) comprises a DC - DC converter for converting the power supply voltage generated from said main power supply means (319) into a power supply voltage having a predetermined level required to drive said back-light means (505).

7. A data processing apparatus with a flat panel display unit comprising:

input means (11, 311) for inputting data and commands;

data processing means (301) for executing data processing on the basis of the data and commands input by said input means (11, 311);

display driving means (313, 317), controlled by said data processing means (301), for outputting a drive signal to drive said flat panel display unit;

main power supply means (319) for generating a power supply voltage to drive said data processing means (301), said display driving means (313, 317), and said flat panel display unit;

a case unit (3) in which said data processing means (301), said display driving means (313, 317), said input means (11, 311), and said main power supply means (319) are arranged; and

first connector means (17), arranged on said case unit (3), for outputting the drive signal from said display driving means (313, 317) and the power supply voltage from said main power supply means (319) to the outside of said case unit (3); characterized by further comprising:

a first flat panel display unit (9) which is prepared as a unit which constitutes said flat panel display unit has second connector means (901) detachable from said first connector means (17), and a detachable mechanism (13, 53) detachable from said case unit (3), and displays data output from said data processing means (301) in accordance with the drive signal and the power supply voltage supplied through the set first and second connector means (17, 901); and

a second flat panel display unit (7) which is prepared as a unit which constitutes said flat panel display unit has said second connector means (701), said detachable mechanism (13, 53), voltage converting means for converting the power supply voltage into a power supply voltage required to perform a display operation for displaying the data output from said data processing means (301), and signal converting means (707) for converting the drive signal into a drive signal required to perform a display operation for displaying the data output from said data processing means (301), and executes a monochrome display operation in accordance with the power supply voltage from said voltage converting means and the drive signal from said signal converting means (707) to serve as a replacement unit with respect to said first flat panel display unit (9).

8. An apparatus according to claim 7, characterized in that said first flat panel display unit has a color liquid crystal display unit (73).

9. An apparatus according to claim 7, characterized in that said second flat panel display unit has a monochrome liquid crystal display unit (71).

10. An apparatus according to claim 7, characterized in that said voltage converting means comprises a DC - DC converter for converting a power supply voltage generated from said main power supply means (319) into a power supply voltage having a predetermined level required to drive said second flat panel display unit (7).

11. An apparatus according to claim 7, characterized in that said signal converting means (707) comprises a circuit for eliminating a color display control signal required to perform a color display operation of said first flat panel display unit (9) from the drive signal from said display driving means (313, 317), and for converting the obtained signal into a drive signal required to perform a monochrome display operation of said second flat panel display unit (7).

FIG. 1

F I G. 2

FIG. 3

F I G. 4